# EUROPEAN PATENT APPLICATION

(11) **EP 4 518 441 A1**
(43) Date of publication of application: **05.03.2025**
(21) Application number: 22939106.5
(22) Date of filing: 28.04.2022
(51) Int. Cl.: H04W 52/02, H04W 72/04, H04W 8/24

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: RGTH
(86) International application number: PCT/CN2022/089950
(87) International publication number: WO 2023/206254

(57) **Abstract**

A communication method and a communications apparatus are provided, and the method includes: transmitting, by a terminal device, first information to a network device, where the first information is used to indicate energy state information of the terminal device, energy corresponding to the energy state information is capable of being used by the terminal device to receive data, and the terminal device is a zero-power terminal device. In embodiments of this application, a terminal device transmits energy state information to a network device, so that the network device can transmit data to the terminal device based on the energy state information. In this way, a case that data transmission fails due to insufficient current energy of the terminal device may be avoided, thereby improving communication efficiency.

## Description

### TECHNICAL FIELD

This application relates to the field of communications technologies, and more specifically, to a communication method and a communications apparatus.

### BACKGROUND

With development of communications technologies, a zero-power terminal is put into use in some communications systems, and the zero-power terminal has features such as low power consumption and low costs. However, because design of the zero-power terminal is relatively simple, a problem may be introduced in a process of using the zero-power terminal.

### SUMMARY

Embodiments of this application provide a communication method and a communications apparatus. Various aspects of embodiments in this application are described below.

According to a first aspect, a communication method is provided and includes: transmitting, by a terminal device, first information to a network device, where the first information is used to indicate energy state information of the terminal device, energy corresponding to the energy state information is capable of being used by the terminal device to receive data, and the terminal device is a zero-power terminal device.

According to a second aspect, a communication method is provided and includes: receiving, by a network device, first information transmitted by a terminal device, where the first information is used to indicate energy state information of the terminal device, energy corresponding to the energy state information is capable of being used by the terminal device to receive data, and the terminal device is a zero-power terminal device; and transmitting, by the network device, data to the terminal device based on the first information.

According to a third aspect, a communications apparatus is provided and includes: a transmitting unit, configured to transmit first information to a network device, where the first information is used to indicate energy state information of the apparatus, energy corresponding to the energy state information is capable of being used by the apparatus to receive data, and the apparatus is a zero-power terminal device.

According to a fourth aspect, a communications apparatus is provided and includes: a receiving unit, configured to receive first information transmitted by a terminal device, where the first information is used to indicate energy state information of the terminal device, energy corresponding to the energy state information is capable of being used by the terminal device to receive data, and the terminal device is a zero-power terminal device; and a transmitting unit, configured to transmit data to the terminal device based on the first information.

According to a fifth aspect, a communications apparatus is provided, and includes a memory, a transceiver, and a processor, where the memory is configured to store a program, the processor performs data transmission and receiving by using the transceiver, and the processor is configured to invoke the program in the memory to execute the method according to the first aspect.

According to a sixth aspect, a communications apparatus is provided, and includes a memory, a transceiver, and a processor, where the memory is configured to store a program, the processor performs data transmission and receiving by using the transceiver, and the processor is configured to invoke the program in the memory to execute the method according to the second aspect.

According to a seventh aspect, a communications apparatus is provided and includes a processor, configured to invoke a program from a memory to execute the method according to the first aspect.

According to an eighth aspect, a communications apparatus is provided and includes a processor, configured to invoke a program from a memory to execute the method according to the second aspect.

According to a ninth aspect, a chip is provided and includes a processor, configured to invoke a program from a memory, to cause a device on which the chip is installed to perform the method according to the first aspect.

According to a tenth aspect, a chip is provided and includes a processor, configured to invoke a program from a memory, to cause a device with the chip installed to perform the method according to the second aspect.

According to an eleventh aspect, a computer-readable storage medium is provided, where the computer-readable storage medium stores a program, and the program causes a computer to execute the method according to the first aspect.

According to a twelfth aspect, a computer-readable storage medium is provided, where the computer-readable storage medium stores a program, and the program causes a computer to execute the method according to the second aspect.

According to a thirteenth aspect, a computer program product is provided, including a program, where the program causes a computer to execute the method according to the first aspect.

According to a fourteenth aspect, a computer program product is provided, including a program, where the program causes a computer to execute the method according to the second aspect.

According to a fifteenth aspect, a computer program is provided, where the computer program causes a computer to execute the method according to the first aspect.

According to a sixteenth aspect, a computer program is provided, where the computer program causes a computer to execute the method according to the second aspect.

In embodiments of this application, a terminal device transmits energy state information to a network device, so that the network device can transmit data to the terminal device based on the energy state information. In this way, a case that data transmission fails due to insufficient current energy of the terminal device may be avoided, thereby improving communication efficiency.

### BRIEF DESCRIPTION OF THE DRAWINGS

FIG. 1 is an example diagram of a wireless communications system according to an embodiment of this application.
FIG. 2 is a schematic diagram of a zero-power communications system according to an embodiment of this application.
FIG. 3 is a schematic structural diagram of an energy harvesting module according to an embodiment of this application.
FIG. 4 is a schematic diagram of a backscatter communication principle according to an embodiment of this application.
FIG. 5 is a circuit diagram of a terminal device based on a resistive load modulation technology according to an embodiment of this application.
FIG. 6 is a schematic diagram of a WiFi communications system according to an embodiment of this application.
FIG. 7 is a schematic diagram of a PPDU frame structure according to an embodiment of this application.
FIG. 8 is a schematic structural diagram of a MAC layer related field according to an embodiment of this application.
FIG. 9 is a schematic structural diagram of a frame control field according to an embodiment of this application.
FIG. 10 is a schematic structural diagram of an NDP frame according to an embodiment of this application.
FIG. 11 is a schematic structural diagram of a signal field of an NDP frame according to an embodiment of this application.
FIG. 12 is a schematic flowchart of a communication method according to an embodiment of this application.
FIG. 13 is a schematic structural diagram of a frame control field of a PPDU frame according to an embodiment of this application.
FIG. 14 is a schematic structural diagram of a communications apparatus according to an embodiment of this application.
FIG. 15 is a schematic structural diagram of a communications apparatus according to another embodiment of this application.
FIG. 16 is a schematic structural diagram of an apparatus according to an embodiment of this application.

### DESCRIPTION OF EMBODIMENTS

The technical solutions in this application are described below with reference to the accompanying drawings.

With the development of wireless communications technologies, it is expected to integrate a wireless communications system with various vertical industries such as logistics, manufacturing, transportation, and energy. For example, the wireless communications system may be integrated with an industrial wireless sensor network (industrial wireless sensor network, IWSN). For another example, a wireless communications system may be integrated with a smart logistics and smart warehousing. For another example, a wireless communications system may be integrated with an intelligent home network.

However, in these industries, a terminal device is generally required to have characteristics such as relatively low costs, a relatively small size (such as an ultra-thin size), maintenance-free, and long life. Therefore, to meet the foregoing condition, communication may be performed between a network device and a terminal device by using a zero-power communication technology. In this case, the terminal device may also be referred to as a "zero-power terminal device" or "zero-power device".

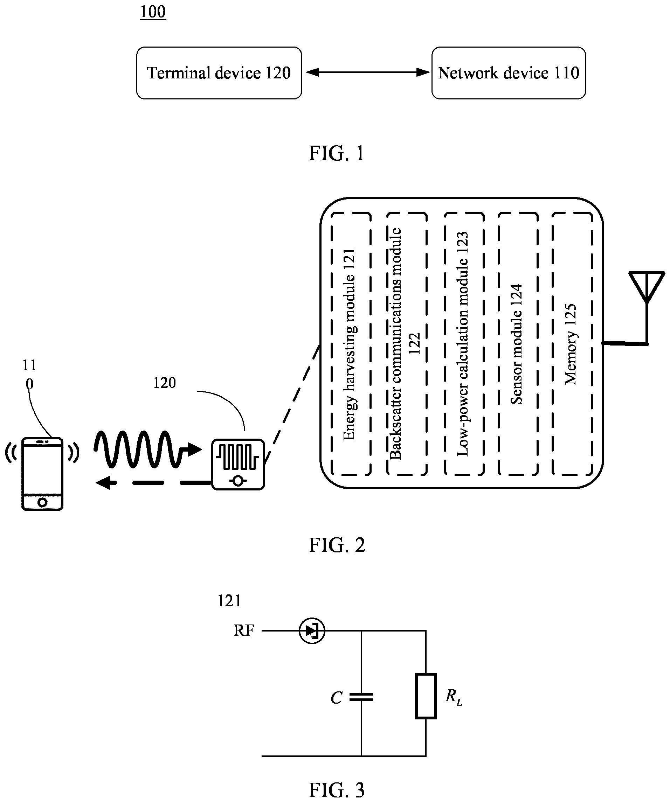

The following describes the zero-power communication technology and the zero-power terminal device with reference to FIG. 1 to FIG. 5. FIG. 1 shows an architecture of a zero-power communications system 100 to which an embodiment of this application is applicable. The structure shown in FIG. 1 includes a network device 110 and a terminal device 120. The network device 110 may be a device in communication with the terminal device 120. The network device 110 may provide communication coverage for a specific geographic area, and may communicate with the terminal device 120 located within the coverage.

The network device 110 and the terminal device 120 may communicate with each other based on a backscatter (back scattering) communication technology. In the backscatter communication technology, a signal used for backscatter communication is extremely important. The signal used for backscatter communication is a radio signal, such as a radio frequency signal. The signal used for backscatter communication may include, for example, an energy supply signal, a carrier signal, and the like. In some embodiments, the network device 110 may transmit an energy supply signal to the terminal device 120, to supply energy to the terminal device. In some other embodiments, the terminal device 120 may transmit data to the network device 110 by using a carrier signal. In some implementations, the energy supply signal may further carry data or control information transmitted by the network device 110 to the terminal device 120. Certainly, the energy supply signal may also be used only for energy supply. This is not limited in embodiments of this application.

It should be noted that FIG. 1 exemplarily shows one network device and one terminal device. Optionally, the communications system 100 may include a plurality of network devices, and another quantity of terminal devices may be included within coverage of each network device. This is not limited in embodiments of this application.

In addition, in some implementations, the communications system 100 may further include another network entity such as a network controller or a mobility management entity. This is not limited in embodiments of this application.

It should be understood that the technical solutions of embodiments of this application may be applied to various communications systems, such as a 5th generation (5th generation, 5G) system or new radio (new radio, NR), a long term evolution (long term evolution, LTE) system, an LTE frequency division duplex (frequency division duplex, FDD) system, LTE time division duplex (time division duplex, TDD), and a cellular Internet of Things. The technical solutions provided in this application may further be applied to future communications systems, such as a sixth-generation mobile communications system.

The terminal device in embodiments of this application may also be referred to as a user equipment (user equipment, UE), an access terminal, a subscriber unit, a subscriber station, a mobile, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may refer to a device providing a user with voice and/or data connectivity and capable of connecting people, objects, and machines, such as a handheld device, a vehicle-mounted device, a home appliance, a sensor, or an electronic tag that has a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. All terminal devices in embodiments of this application may be zero-power terminals.

The network device in embodiments of this application may be a device configured to communicate with the terminal device. If the terminal device is an electronic tag, the network device may be a reader/writer (for example, a reader/writer based on a radio frequency identification (radio frequency identification, RFID) technology) that is configured to read from or write into the electronic tag. The network device may be alternatively an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB, an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device (device-to-device, D2D), vehicle-to-everything (vehicle-to-everything, V2X), and machine-to-machine (machine-to-machine, M2M) communication, a network-side device in a 6G network, a device that functions as a base station in a future communications system, or the like. The base station may support networks with a same access technology or different access technologies. A specific technology and a specific device form used by the network device are not limited in embodiments of this application.

The base station may be a fixed or mobile base station. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being indoors or outdoors, handheld, or vehicle-mounted; may be deployed on a water surface; or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

For ease of understanding of the zero-power communication technology, the following describes a terminal device that supports the zero-power communication technology with reference to FIG. 2.

Generally, the terminal device 120 may include an energy harvesting module 121 and a backscatter communications module 122. The energy harvesting module 121 and the backscatter communications module 122 are described below with reference to FIG. 3 to FIG. 5. For brevity, details are not described here again. In some cases, the terminal device 120 may further include a low-power calculation module 123. The low-power calculation module 123 is configured to provide the terminal device 120 with a calculation function, for example, data processing. In some other cases, the terminal device 120 may further include a sensor 124, configured to collect external information (such as an ambient temperature and ambient humidity). In some other cases, the terminal device 120 may further include a memory 125, configured to store some information (for example, the external information collected by using the sensor or an object identifier).

The energy harvesting module 121 is configured to harvest energy. In some implementations, energy may be harvested by using an energy supply signal transmitted by a network device. The energy supply signal may be a "radio frequency signal" transmitted by the network device. Therefore, the energy harvesting module is also referred to as a "radio frequency energy harvesting module".

FIG. 3 shows a possible structure of an energy harvesting module. As shown in FIG. 3, the energy harvesting module 121 may harvest energy of a spatial electromagnetic wave of a radio frequency signal based on an electromagnetic induction principle, and store harvested energy in a capacitor C. This is a process of charging the capacitor C. After the charging process of the capacitor C ends, the capacitor C may start to discharge to supply energy to the terminal device for operation. For example, the discharging of the capacitor C may be used to drive the terminal device to perform low-power demodulation on data transmitted by the network device. For another example, the discharging of the capacitor C may be used to drive a terminal to perform modulation on data to be transmitted. For another example, the discharging of the capacitor C may be used to drive a sensor of the terminal device to collect data. For another example, the discharging of the capacitor C may be used to drive the terminal device to read data in the memory 125, or the like.

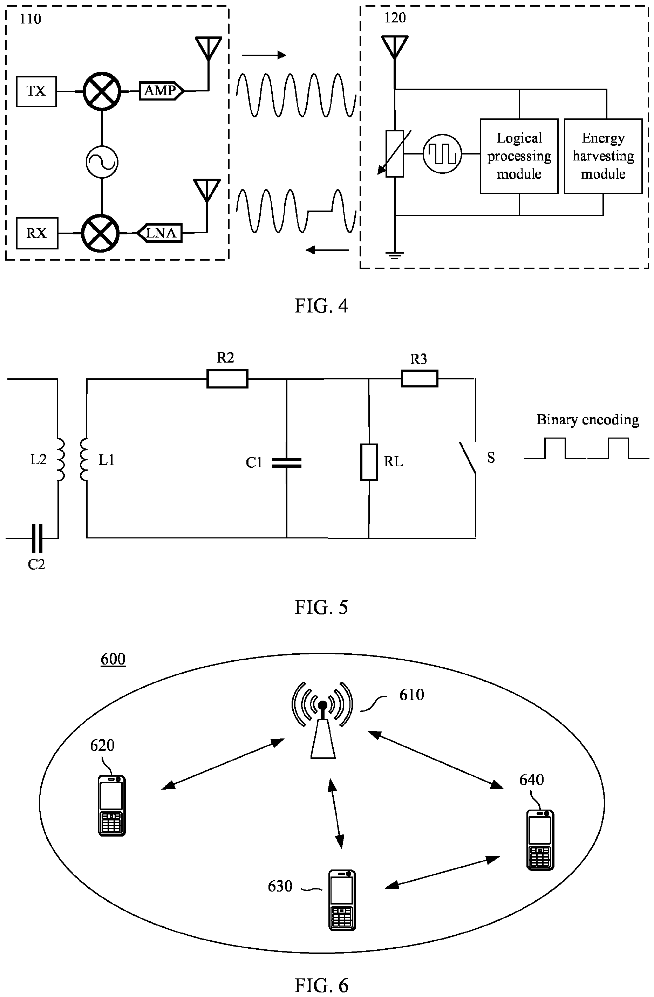

The backscatter communications module 122 is configured to perform backscatter communication between the terminal device 120 and the network device 110. A backscatter communication principle according to an embodiment of this application is described below with reference to FIG. 4. Referring to FIG. 4, the terminal device 120 receives a radio signal transmitted by the network device 110, and modulates the radio signal to load data that needs to be transmitted. Finally, a modulated signal is radiated from an antenna. This information transmission process is referred to as backscatter communication. The radio signal may also be referred to as a carrier signal. The carrier signal may be a radio signal that is not modulated. The carrier signal may be, for example, a sine wave signal. The backscatter communication is inseparable from a load modulation function. The load modulation function may be understood as that a circuit parameter of an oscillation loop of the terminal device is adjusted and controlled according to a beat of a data stream, such that parameters such as magnitude of impedance of the terminal device change accordingly, thereby completing a modulation process.

In some implementations, another component may be further disposed on a transport (transport, TX) path of the network device 110. The component is configured to process a to-be-transmitted signal and may be, for example, an amplifier (amplifier, AMP). Another component may be further disposed on a receive (receive, RX) path of the network device 110. The component is configured to process a received signal and may be, for example, a low noise amplifier (low noise amplifier, LNA).

In some other implementations, the terminal device 120 may include an energy harvesting module, and the energy harvesting module may be configured to collect any signal in an environment. For example, the energy harvesting module may be configured to harvest energy of an energy supply signal transmitted by a network device. A form of the energy supply signal is not specifically limited in embodiments of this application. For example, the energy supply signal may be a modulated radio signal, or may be an unmodulated radio signal. The carrier signal described above may also be used as an energy supply signal. For another example, the power supply signal may also be a wireless signal of any waveform, such as a sine wave or a square wave.

Certainly, a logic processing module may be further disposed in the terminal device 120, to execute a corresponding calculation function.

It should be noted that, regardless of the network device 110 or the terminal device 120, FIG. 4 only exemplarily shows a connection structure of a signal processing circuit. Processing circuits of the network device 110 and/or the terminal device 120 may include other components. This is not specifically limited in embodiments of this application.

Generally, the load modulation function may be implemented in two manners: resistive load modulation and capacitive load modulation. FIG. 5 shows a circuit diagram of a terminal device based on a resistive load modulation technology. It should be noted that a manner in which the circuit in FIG. 5 implements the load modulation technology is similar to a manner in which an existing circuit implements the load modulation technology. For brevity, functions of resistors R2 and R3, capacitors C1 and C2, and inductors L1 and L2 included in the circuit shown in FIG. 5 are not described again.

In resistive load modulation, a resistor RL may be connected in parallel to the load. The switch S may implement on/off of the resistor RL based on control of a binary data stream. In this way, on/off of the resistor RL causes a change in a voltage of the circuit, and the change in the voltage of the circuit may control an amplitude of a backscatter signal from the terminal device, so as to implement modulation of the backscatter signal, that is, amplitude-shift keying (amplitude-shift keying, ASK) modulation of the backscatter signal.

Similarly, in capacitive load modulation, on/off of a capacitor may be controlled based on a binary data stream, to change a resonance frequency of the circuit, thereby changing an operating frequency of the backscatter signal. In this way, frequency-shift keying (frequency-shift keying, FSK) modulation is implemented.

As described above, the terminal device may perform information modulation on a received signal (namely, a carrier signal) in a manner of load modulation, to implement a backscatter communication process. Therefore, a terminal device in backscatter communication generally has the following advantages.

Advantage 1: Since the terminal device does not need to proactively transmit a signal, a complex radio frequency path does not need to be constructed. For example, components such as a power amplifier (power amplifier, PA) and a radio frequency filter may not be provided in the radio frequency path, so as to reduce costs and a volume of the terminal.

Advantage 2: Since the terminal device does not need to proactively generate a high-frequency signal, there is no need for a high-frequency crystal oscillator, so that costs and a volume of the terminal device are reduced.

Advantage 3: Because the terminal device may communicate with the network device by using a backscatter technology, energy consumed by the terminal device during communication is relatively low, and even energy of the terminal device does not need to be consumed.

In addition to the backscatter communication, energy harvesting, and load modulation function described above, the terminal device may further have a coding function. Data transmitted by an encoding end (for example, a terminal device or an electronic tag) may be represented as binary "1" and "0" by using different forms of code. In a zero-power communications system, commonly used coding manners may include non-return-to-zero inverted (NRZ) encoding, Manchester (Manchester) encoding, unipolar return-to-zero (Unipolar RZ) encoding, differential bi-phase (DBP) encoding, Miller (Miller) encoding, differential encoding, and the like. Generally speaking, an encoding process is to represent 0 and 1 by using different pulse signals.

Based on the foregoing descriptions of the zero-power communication technology, it may be learned that a terminal device in zero-power communication (also referred to as a "zero-power terminal device") consumes little energy of the terminal device for communication, and may even not consume energy of the terminal device. Therefore, in the zero-power communication technology, terminal devices may be classified, based on an energy source and an energy use manner of the terminal devices, into three types: a passive zero-power terminal, a semi-passive zero-power terminal, and an active zero-power terminal.

### 1 Passive zero-power terminal

A battery usually does not need to be installed on the passive zero-power terminal. When the terminal device approaches a network device, the terminal device is located within coverage of a near field formed by radiation of an antenna of the network device. In this case, the antenna of the terminal device may generate an induced current by using electromagnetic induction, and the induced current may supply energy to the terminal device, to implement demodulation of a received signal and/or modulation, encoding, and the like of a to-be-transmitted signal. In some implementations, the passive zero-power terminal may be an electronic tag. Accordingly, the network device may be a reader/writer in a radio frequency identification (RFID) system, and is configured to read content in the electronic tag and/or is configured to change the content in the electronic tag.

### II. Semi-passive zero-power terminal

No conventional battery is installed in the semi-passive zero-power terminal, but radio wave energy may be harvested by using the energy harvesting module 121, and the harvested energy may be stored in an energy storage unit (such as a capacitor). After obtaining the energy, the energy storage unit may supply energy to the terminal device, so as to implement demodulation of a received signal, and/or modulation and encoding of a signal to be transmitted, and the like.

### III. Active zero-power terminal

The active zero-power terminal may have a built-in battery. The battery may supply energy to the terminal device, so as to implement demodulation of a received signal, and/or modulation and encoding of a signal to be transmitted, and the like. However, when the terminal device performs communication by using a backscatter technology, the terminal device does not need to consume energy of the battery. Therefore, for such a terminal device, "zero power" is mainly reflected in a scenario in which the terminal device performs communication by using the backscatter technology. Certainly, when transmitting a signal, the active zero-power terminal may also be supplied by a built-in battery, to increase a communication distance of the zero-power terminal and improve communication reliability.

In some implementations, the active zero-power terminal may be an electronic tag, and the network device may be an RFID reader/writer. In this case, the built-in battery may supply power to an RFID chip in the terminal device, to increase a read/write distance between the RFID reader/writer and the electronic tag. In another aspect, the built-in battery may supply power to the RFID chip in the terminal device, so as to shorten a read/write delay of the RFID reader/writer on the electronic tag, thereby improving communication reliability.

A zero-power terminal in embodiments of this application has features such as low complexity, supporting environmental energy supply, backscatter, and a new waveform. A name of the zero-power terminal in embodiments of this application does not constitute a limitation on an energy source and an energy usage manner of the terminal, provided that energy required for operation of the terminal mainly comes from an external environment. In this case, the terminal device may be a zero-power device or a low power device. In some embodiments, the zero-power terminal may also be referred to as an environment energy-supplying terminal, an energy-harvesting-based terminal, or the like.

With rapid development of communication technologies, types and application scenarios of terminal devices keep increasing, and higher requirements are also imposed on prices and power consumption of the terminal devices. In some communications systems, a zero-power terminal is introduced to reduce power consumption and costs of the terminal. For example, in a current protocol, it starts to be considered that a zero-power terminal is introduced into a wireless fidelity (wireless fidelity, WiFi) communications system, to reduce power consumption and costs of WiFi communications devices. The following describes a WiFi communications system with reference to FIG. 6.

FIG. 6 is a schematic diagram of a WiFi communications system according to an embodiment of this application. The system 600 shown in FIG. 6 includes an access point (access point, AP) 610 and stations (station, STA) 620 to 640. The AP may be a device that communicates with the STAs. The AP may provide communication coverage for a specific geographical area, and may communicate with a STA located in the coverage area.

In some embodiments, communication may also be performed between a plurality of STAs, and the communication between the plurality of STAs may also be understood as D2D communication. As shown in FIG. 6, the STA 630 may communicate with the STA 640.

The WiFi system may include one or more basic service sets (basic service set, BSS). A network node of the BSS includes an AP and a STA. Each BSS may include one AP and a plurality of STAs associated with the AP. It should be noted that FIG. 6 exemplarily shows one AP and three STAs. Optionally, the communications system 600 may include a plurality of APs, and another quantity of STAs may be included within coverage of each AP. This is not limited in embodiments of this application.

The AP may also be referred to as a radio access point, a hotspot, or the like. The AP is an access point for a terminal device to access a wired network, and is mainly deployed in a home, a building, or a campus. A coverage radius of a typical AP is tens of meters to hundreds of meters. It should be understood that the AP may also be deployed outdoors. Currently, the AP mainly uses an institute of electrical and electronics engineers (institute of electrical and electronics engineers, IEEE) 802.11 series standard. The AP in embodiments of this application may support one or more of the following standards: 802.11ah, 802.11a/g, 802.11e, 802.11n, 802.11ax, 802.11be, 802.11ac, 802.11g, 802.11b, or 802.11a.

The STA may be understood as a terminal device. The STA may be a wireless communications chip, a wireless sensor, or a wireless communications terminal. The STA may be any type of terminal device described above. For example, the STA may be a mobile phone, a tablet computer, a set-top box, a smart TV, a smart wearable device, a vehicle-mounted communications device, a computer, or the like that supports a WiFi communication function. The STA may be a device that supports IEEE 802.11 series standards. For example, the STA may support one or more of the following standards: 802.11ah, 802.11a/g, 802.11e, 802.11n, 802.11 ax, 802.11be, 802.11ac, 802.11g, 802.11b, or 802.11a.

A WiFi device generally performs information transmission based on a physical layer protocol data unit (physical layer protocol data unit, PPDU) frame. For ease of understanding, the following first describes a structure of the PPDU frame.

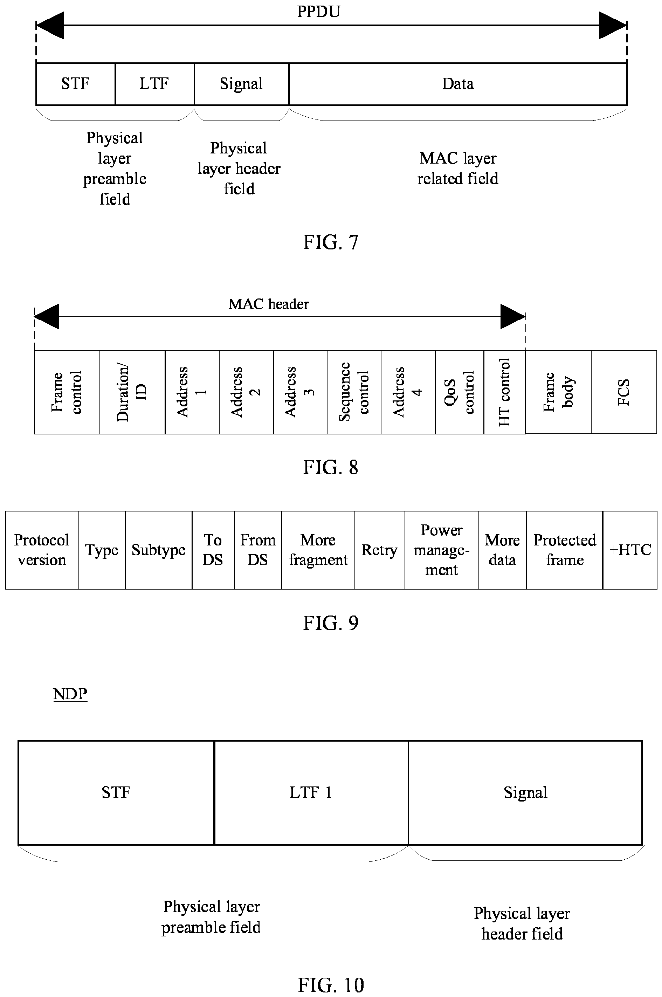

The PPDU frame may include a physical layer related field and a medium access control (medium access control, MAC) layer related field. The MAC layer related field may also be referred to as a data part. FIG. 7 shows a schematic diagram of a PPDU frame structure. Referring to FIG. 7, the physical layer related field may include a physical layer header (header) field and a physical layer preamble (preamble) field. The physical layer preamble field may include a short training field (short training field, STF) and a long training field (long training field, LTF).

The STF in the physical layer preamble field may include 10 short symbols (symbol), and the 10 symbols may be denoted as t1 to t10. A length of each symbol may be 0.8 µs. Each symbol includes many functions, and is mainly used to implement frame synchronization and coarse frequency synchronization. t1 to t7 mainly include functions such as signal detect (signal detect), automatic gain control (automatic gain control, AGC), and diversity receiving (diversity selection). t8 to t10 mainly include functions such as coarse frequency (coarse frequency) synchronization, offset estimation (offset estimation), and timing synchronization (timing synchronize).

The LTF in the physical layer preamble field is mainly used to implement fine frequency synchronization and channel estimation.

The physical layer header field may include a signal (signal) field. The signal field is used to carry information related to the data part. For example, the signal field may be used to carry information such as a data transmission rate, a length (length) of a data packet, a reserved bit, and a tail bit.

FIG. 7 is only a schematic diagram of a PPDU frame, and does not constitute a limitation on the solutions in embodiments of this application. For example, a manner of dividing a physical layer header may vary in different protocols. The 802.11a/g is used as an example. For a PPDU frame in the 802.11a/g, a physical layer header field of the PPDU frame includes a physical layer preamble field and a signal field.

The MAC layer related field may be used to carry a MAC frame. A frame format of the MAC frame may include the following parts: a MAC header field, a frame body (frame body) field, and a frame check sequence (frame check sequences, FCS) field, as shown in FIG. 8.

The MAC header field may include the following parts: a frame control (frame control) field, a duration or identity (duration or identity, duration/ID) field, an address field (address) field, a sequence control (sequence control) field, a quality of service control (quality of service control, QoS control) field, and a high throughput control (high throughput control, HT control) field.

Referring to FIG. 9, the frame control field of the MAC header may include the following parts: a protocol version (protocol version) field, a type (type) field, a subtype (subtype) field, a to DS field, a from DS field, a more fragment (more fragment) field, a retry (retry) field, a power management (power management) field, a more data (more data) field, a protected frame (protected frame) field, and a +high throughput control (high throughput control, +HTC) field. The following describes these parts.

Protocol version field: used to indicate a version number used for the PPDU frame. A value of the Protocol version field may be 0 or 1.

Type field: used to indicate a type of the PPDU frame. The type of the PPDU frame may include a control frame, a management frame, and a data frame. The control frame may be used for handshake communication and positive acknowledgement during contention, ending of a non-contention period, and the like. The management frame may be used to control negotiation and a relationship between a STA and an AP, such as association, authentication, and synchronization. The data frame may be used to transmit data in a contention period and a non-contention period.

Subtype field: used to further determine a subtype of a frame type. The following provides values and related descriptions of the type field and the subtype field with reference to Table 1.

To DS field: used to indicate that the PPDU frame is a frame transmitted from a BSS to a distribution system (distribution system, DS).

From DS field: used to indicate that the PPDU frame is a frame transmitted from a DS to a BSS.

More fragment field: used to describe a case in which a long frame is fragmented. For example, when a value of this field is 1, it indicates that there is another frame that needs to be transmitted.

Retry field: used for frame retransmission, indicating that a fragment is a retransmission frame of a previously transmitted fragment. A receive end may cancel the retransmission frame by using the retry field.

Power management field: used to indicate a power management mode used by a STA after transmission of a frame. When a value of this field is 1, it indicates that the STA is in a power save mode. When the value of this field is 0, it indicates that the STA is in a non-power save mode.

More data field: in a case that a value of this field is 1, it indicates that there is at least one data frame that needs to be transmitted to a STA.

Protected frame field: used to indicate whether a frame body includes data processed by using a key (for example, a wired equivalent privacy (wired equivalent privacy, WEP) algorithm). If the frame body includes encrypted data, a value of this field is 1. If the frame body does not include encrypted data, the value of this field is 0.

The +HTC field is an indicator bit related to the HT Control field, and is used to indicate some control information.

The foregoing describes the frame control field in the MAC header field with reference to FIG. 9, and the following describes other fields in the MAC header field.

Duration/ID field: used to indicate how long the PPDU frame and an acknowledgement frame of the PPDU frame will occupy a channel. A value of this field may be used for calculation of a network allocation vector (NAV).

Address 1 field to address 4 field: used to indicate address fields. The address fields may indicate one or more of the following: a destination address (destination address, DA), a source address (source address, SA), a transmitting address (transmitting address, TA), a receiving address (receiving address, RA), or a BSS ID.

Sequence control field: may be used to filter out a duplicate frame. The Sequence control field may include a 12-bit sequence number (sequence number) representing a MAC service data unit (MAC service data unit, MSDU) or a MAC management service data unit (MAC management service data unit, MMSDU), and a 4-bit fragment number (fragment number) representing each fragment of the MSDU and the MMSDU.

The QoS control field is a newly added field in a MAC layer in the 802.11e, and is used for priority control. This field is available only in a case that the data frame is of a QoS data subtype.

The HT control field is a newly added field in a MAC layer in the 802.11n. Since the 802.11n, MAC starts to support a 40M bandwidth, that is, two original 20M bandwidths are combined into one 40M bandwidth. This field provides some control for high-throughput data. This field is available only in a case that the PPDU frame is a high-throughput frame.

The frame body field is also referred to as a data field, and is used to carry transmitted or received information.

The FCS field may include a 32-bit cyclic redundancy check (cyclic redundancy check, CRC), and is used to detect an error in the PPDU frame.

Table 1 shows manners in which types and subtypes are combined.

It may be learned from Table 1 that in a case that a value of a type field is 01, it indicates that the PPDU frame is a control frame. In a case that the value of the type field is 00, it indicates that the PPDU frame is a management frame. In a case that the value of the type field is 10, it indicates that the PPDU frame is a data frame. A value 11 of the type field indicates a reserved value.

**Table 1**

| Type | Type description | Subtype | Subtype description |
|---|---|---|---|
| 01 | Control | 1100 | CTS |
| 01 | Control | 1101 | ACK |
| 00 | Management | 1000 | Beacon |
| 10 | Data | 0000 | Data |

For a control frame, the control frame may be classified into different subtypes according to a value of a subtype field. For example, in a case that the value of the subtype field is 1100, it indicates that the PPDU frame is a clear to send (clear to send, CTS) frame. In a case that the value of the subtype field is 1101, it indicates that the PPDU frame is an acknowledge (acknowledge, ACK) frame. Reserved values of the subtype field are 0000 to 0110.

For a management frame, the management frame may be classified into different subtypes according to a value of a subtype field. For example, in a case that the value of the subtype field is 1000, it indicates that the PPDU frame is a beacon (beacon) frame. Reserved values of the subtype field are 0110 to 0111 and 1111.

For a data frame, the data frame may be classified into different subtypes according to a value of a subtype field. For example, in a case that the value of the subtype field is 0000, it indicates that the PPDU frame is a data frame. A reserved value of the subtype field is 1101.

In a case that the value of the type field is 11, all values of the subtype field are reserved values, that is, reserved values of the subtype field are 0000 to 1111.

In addition to the data frame, the control frame, and the management frame described above, the PPDU frame may further include another type of frame, for example, a null data packet (null data packet, NDP) frame.

A main function of the NDP frame is to measure or carry control information. The NDP frame does not carry data. A structure of the NDP frame mainly includes a physical layer related field, but does not include a MAC layer related field. For example, the NDP frame mainly includes a physical layer preamble field and a physical layer header field, but does not include a MAC header field and an MSDU, as shown in FIG. 10.

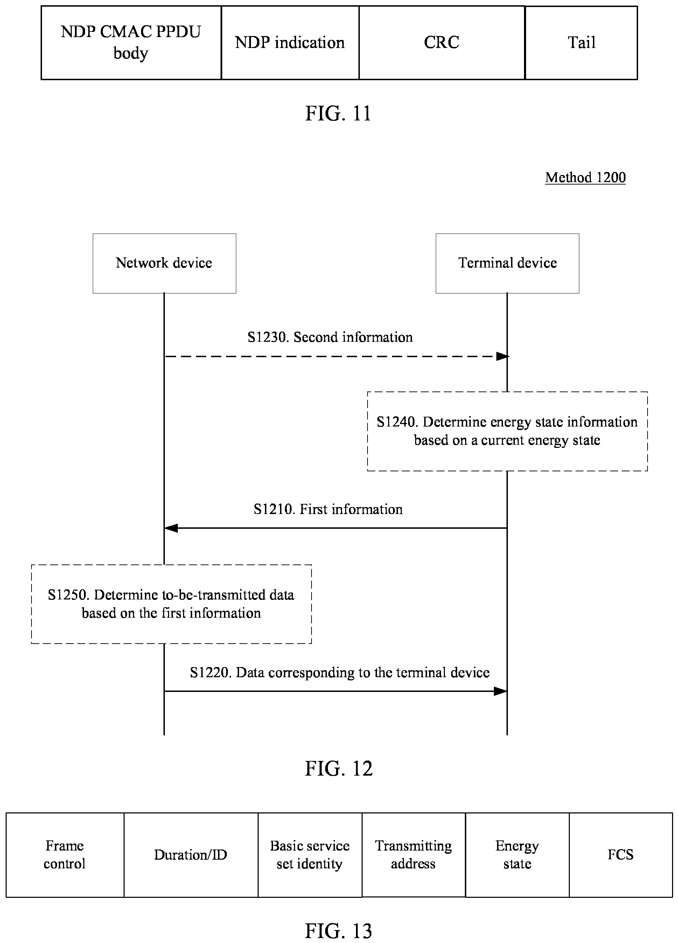

The 802.11ah is used as an example. An NDP frame may include an S1G NDP sounding (Sounding) frame and an NDP carrying medium access control (carrying medium access control, CMAC) PPDU frame. The S1G NDP Sounding frame may be used for channel measurement. The NDP CMAC PPDU frame may be used to carry control information. A structure of the NDP CMAC PPDU frame is shown in FIG. 11.

The physical layer header field may include a signal field. A length of the signal field is related to a data transmission rate. FIG. 11 is a schematic structural diagram of a signal field. The signal field may include the following fields: an NDP CMAC PPDU body field, an NDP indication (indication) field, a CRC field, and a tail (tail) field.

The NDP indication field may be used to indicate a type of the NDP. For example, in a case that a value of the NDP indication field is 0, it indicates that the NDP frame is an S1G NDP Sounding frame. In a case that the value of the NDP indication field is 1, it indicates that the NDP frame is an NDP CMAC PPDU frame.

The NDP CMAC PPDU body field may be used to indicate a type of information carried in the NDP frame. For example, the NDP CMAC PPDU body field may include an NDP CMAC PPDU type field and related control information. For example, in a case that the NDP CMAC PPDU type field indicates that the NDP is a CTS, it indicates that the control information carried in the NDP is CTS information.

With development of communications technologies, a zero-power terminal is put into use in some communications systems, and the zero-power terminal has features such as low power consumption and low costs. However, because design of the zero-power terminal is relatively simple, a problem may be introduced in a process of using the zero-power terminal.

In actual network deployment, a technical bottleneck that a passive zero-power communication technology faces is a limited coverage distance of a forward link, and a main reason is that a communication distance of the forward link is limited by signal strength of a wireless signal that reaches a zero-power terminal. Based on a conventional implementation process, the zero-power terminal generally needs to consume 10 uw (microwatts) of power to drive a low-power circuit. This means that power of the signal reaching the zero-power terminal needs to be at least -20 dBm. Due to a requirement of radio supervision, transmit power of a network device usually cannot be excessively large. For example, maximum transmit power is 30 dBm in an industrial scientific medical band (industrial scientific medical band, ISM) in which RFID operates. Therefore, considering a radio propagation loss in space, a transmission distance of the passive zero-power terminal usually ranges from 10 m to tens of meters.

However, the semi-passive zero-power terminal has a potential to significantly extend a communication distance because the semi-passive zero-power terminal can harvest radio waves by using an RF energy harvesting module, and can continuously obtain radio energy and store the radio energy in the energy storage unit. After obtaining enough energy, the energy storage unit may drive the low-power circuit to perform operations of demodulating a forward link signal, modulating a reverse link signal, and the like. Therefore, the semi-passive zero-power terminal is equivalent to an active terminal, and downlink coverage of the semi-passive zero-power terminal depends on sensitivity (which is usually far less than an RF energy harvesting threshold) of a receiver of a downlink signal. Based on a current process, the energy harvesting module may harvest energy when strength of a received radio signal is not less than -30 dBm, and input the energy to the energy storage unit. Therefore, forward link coverage of the semi-passive zero-power terminal depends on the RF energy harvesting threshold (for example, -30 dBm). Compared with that for the passive zero-power terminal, strength of a received radio signal relaxes from -20 dBm to -30 dBm. Therefore, a link budget gain of 10 dB may be obtained, and downlink coverage may be enlarged by more than 3 times.

However, while the forward link coverage is enlarged, the semi-passive zero-power terminal also faces a problem of a decrease in charging efficiency. As strength of a received signal decreases, energy that can be harvested and stored by the energy harvesting module greatly decreases. For example, when strength of a received signal is -30 dBm, that is, 1 microwatt, energy that can be harvested and stored is far less than 1 microwatt (energy harvesting efficiency is greatly reduced). In addition, as described above, the low-power circuit of the zero-power terminal may need to consume average power of 10uw.

The semi-passive zero-power terminal has an energy harvesting function. However, when a strength of an energy supply signal received by the semi-passive zero-power terminal is less than a specific threshold, energy provided by the energy supply signal is less than energy consumed for communication. In this case, it needs to obtain sufficient energy through energy harvesting to drive the zero-power terminal to perform communication. In this case, the semi-passive zero-power terminal cannot always ensure continuous communication, and communication will be interrupted due to the need for energy harvesting, thereby causing communication failure.

To solve one or more of the foregoing technical problems, this application provides a communication method and a communications apparatus. The following describes in detail the embodiments of this application with reference to FIG. 12.

FIG. 12 is a schematic flowchart of a communication method according to an embodiment of this application. The method 1200 shown in FIG. 12 may include steps S1210 and S1220. Details are as follows.

S1210. A terminal device transmits first information. Correspondingly, a network device receives the first information.

The terminal device may be a zero-power terminal device. For example, the terminal device may be a semi-passive zero-power terminal device.

Optionally, the terminal device may be a station (station, STA) in a WiFi system. For example, the terminal device may be a zero-power station. Correspondingly, the network device may be an access point (access point, AP) in the WiFi system.

Optionally, the terminal device may operate in a power save mode (power save mode, PSM). For example, in the WiFi system, when the STA is in the PSM mode, the AP caches downlink data corresponding to the STA.

After completing sleep, the STA may transmit a request to the AP, and the AP transmits downlink data corresponding to the STA. For example, in S1210, the terminal device may transmit first information to the network device.

Optionally, the first information may be used to request the network device to transmit cache data corresponding to the terminal device.

The first information may be used to indicate energy state information of the terminal device. Energy corresponding to the energy state information can be used by the terminal device to receive data. The energy corresponding to the energy state information may be energy harvested or stored by the terminal device.

The energy state information may include at least one of the following: energy supply manner, energy storage state, an allowed length of to-be-received data, a data transmission rate, recovery duration, wake-up duration, operation duration, entering energy recovery state, or exiting energy recovery state.

The energy supply manner may indicate a manner in which the terminal device harvests energy currently. The energy supply manner may determine a capability of the terminal device to receive data. For example, the terminal device may harvest energy by using at least one of the following: a radio frequency signal, natural light, pressure, or heat.

The energy storage state may indicate whether the terminal device is currently performing energy storage. For example, if energy currently stored in the terminal device is enough to perform data receiving, the terminal device may be in a non-energy storage state (that is, operation can be performed). If energy currently stored in the terminal device is not enough to perform data receiving, the terminal device may be in an energy storage state. The energy storage state may alternatively indicate a specific degree to which the terminal device has currently stored energy, for example, the energy storage state may indicate that the terminal device has currently stored energy to a degree of 80%.

The allowed length of to-be-received data may indicate a length of data or a size of a data packet that can be received by using energy currently stored in the terminal device.

The data transmission rate may indicate a data transmission rate that can be supported by energy currently stored in the terminal device.

The recovery duration may indicate duration required for the terminal device to currently recover to an energy state that is sufficient for data reception.

The wake-up duration may indicate duration in which the terminal device is currently in a wake-up state (non-energy storage state), or duration in which the terminal device can currently perform data reception.

The operation duration may indicate duration in which the terminal device can currently perform data reception.

The entering energy recovery state indicates that the terminal device has currently entered an energy recovery state or is currently in an energy recovery state. The exiting energy recovery state indicates that the terminal device has currently exited an energy recovery state or is currently not in an energy recovery state. The energy recovery state may refer to that the terminal device is recovering energy, or may be understood as that the terminal device is performing energy storage, that is, the energy recovery state may also refer to the energy storage state.

In this application, the terminal device may transmit the first information to the network device by using a plurality of different types of frames.

Optionally, the first information may be carried in a power saving-poll (power saving-poll, PS-Poll) frame. In this case, the terminal device may be in the power save mode. For example, as shown in FIG. 13, an energy state (energy state) field may be added to an existing PS-Poll frame, and the energy state field may represent the first information. Alternatively, the first information may be represented by using a field in the existing PS-Poll frame (the existing PS-Poll frame is obtained by removing the energy state field from the PS-Poll frame shown in FIG. 13).

Optionally, the first information may be carried in a first physical layer protocol data unit PPDU frame. Optionally, a type of the first PPDU frame may be a data frame, a control frame, or a management frame.

The first information may be carried in a medium access control MAC layer header or a frame body field of the first PPDU frame, and a structure of the first PPDU frame may be as shown in FIG. 7.

For example, as shown in FIG. 8, the first information may be carried in a frame control field (frame control field) in the MAC layer header, in another field in the MAC layer header, or in a frame body.

The first information may be carried in a frame control field (frame control field) in a MAC header. For example, as shown in FIG. 9, the first information may be carried in a power management field of the frame control field.

As shown in FIG. 9, a subtype field of the frame control field may indicate that the first PPDU frame carries the first information. For a control frame, reserved values of the subtype field are 0000 to 0110, and a new subtype of the control frame may be defined to indicate that the first PPDU frame carries the first information. For example, the subtype of the control frame may be defined as 0000, to indicate that the PPDU frame carries the first information.

Optionally, the first information may be carried in a null data packet NDP frame, and a structure of the NDP frame may be as shown in FIG. 10.

The first information may be carried in a signal field of the NDP frame. For example, as shown in FIG. 11, the NDP CMAC PPDU body field of the signal field in the NDP frame may indicate the first information.

The NDP CMAC PPDU body field includes an NDP CMAC PPDU type field and related control information, and the NDP CMAC PPDU type field may indicate that control information carried in the NDP is CTS information. In this application, a new NDP CMAC PPDU type may be defined to carry the first information.

Before S1210, the method 1200 may further include a step S1230. Details are as follows.

S1230. The network device transmits second information. Correspondingly, the terminal device receives the second information. Optionally, the second information may be used to indicate whether data corresponding to the terminal device is cached in the network device.

The network device may transmit the second information by using a broadcast message. For example, in a WiFi system, an AP may periodically broadcast status of a cache area of the AP to each station within coverage of the AP, so that each station learns whether data of the station is cached in the AP.

Optionally, the second information may be carried in a beacon (beacon) frame. Optionally, a traffic indication map (traffic indication map, TIM) in the beacon frame may indicate second information. The TIM may be a traffic indicator map based on a bitmap (bitmap) structure, which is used to identify cache information of the AP. For example, each bit (bit) in the bitmap may be corresponding to an association ID (association identifier, AID) of one STA. If the bit is 1, it indicates that a STA corresponding to the AID has data that is cached; or if the bit is 0, it indicates that a STA corresponding to the AID does not have data that is cached.

After the sleep ends, the terminal device may check whether the bit corresponding to the terminal device is 1 or 0, so as to determine whether to transmit a data request to the network device.

Before S1210, the method 1200 may further include a step S1240. Details are as follows.

S1240. The terminal device determines energy state information based on a current energy state.

Optionally, the terminal device may determine the energy state information based on the current energy state of the terminal device. The current energy state of the terminal device may refer to energy currently stored (harvested) by the terminal device, or energy that is currently stored by the terminal device and that can drive the terminal device to perform backscatter communication.

Optionally, before S1240, the terminal device may further determine, based on the current energy state of the terminal device, whether to transmit the first information.

After receiving the first information, the network device may determine, based on the first information, a transmission manner (of cached data corresponding to the terminal device).

S1220. The network device transmits data based on the first information. Correspondingly, the terminal device receives the data based on the first information.

Optionally, before S1220, the network device may further determine, based on the first information, whether to transmit data. Optionally, based on the first information, the network device may determine to transmit data to the terminal device, or determine not to transmit data to the terminal device.

For example, if the first information indicates that the terminal device is in the energy storage state, the network device may determine not to transmit data to the terminal device.

In other words, in S1220, that the network device transmits data based on the first information may refer to that the network device transmits data to the terminal device based on the first information, or the network device does not transmit data to the terminal device based on the first information. Correspondingly, the terminal device may receive data transmitted by the network device, or the terminal device may not receive data transmitted by the network device.

Optionally, in a case of transmitting data to the terminal device, the network device may further determine, based on the first information, a length of data transmitted to the terminal device, duration, or the like.

For example, before S 1220, the method 1200 may further include a step S 1250. Details are as follows.

S1250. The network device determines to-be-transmitted data based on the first information. For example, the network device may determine, based on the first information, one or more of a data length, a transmission rate, transmission duration, or the like of the to-be-transmitted data.

Optionally, the network device may transmit third information to the terminal device. The third information may be used to indicate whether data corresponding to the terminal device is still cached in the network device after the terminal device receives data transmitted by the network device.

Optionally, the network device may transmit data to the terminal device by using a second PPDU frame, and the third information may be carried in the second PPDU frame. For example, a structure of the second PPDU frame may be as shown in FIG. 9. A more data (more data) field in a frame control field in the second PPDU frame may indicate the third information.

In a case that the third information indicates that data corresponding to the terminal device is still cached in the network device, the terminal device may continue to request data from the network device. For a specific method, reference may be made to foregoing embodiments. For example, in a case that the more data field is 1 (that is, indicating that data corresponding to the terminal device is still cached in the network device), the terminal device may transmit, to the network device, a PS-Poll frame that carries an energy state field, so as to request data from the network device.

Further, in a case that the terminal device transmits the data request to the network device for a plurality of times, energy state information may be carried only in the first piece of data request information. For example, the energy state field is carried in the first PS-Poll frame transmitted by the terminal device after waking up. If the more data field is 1, the energy state field may not be carried in a PS-Poll frame that is transmitted subsequently by the terminal device.

In embodiments of this application, a terminal device transmits energy state information to a network device, so that the network device can transmit data to the terminal device based on the energy state information. In this way, a case that data transmission fails due to insufficient current energy of the terminal device may be avoided, thereby improving communication efficiency.

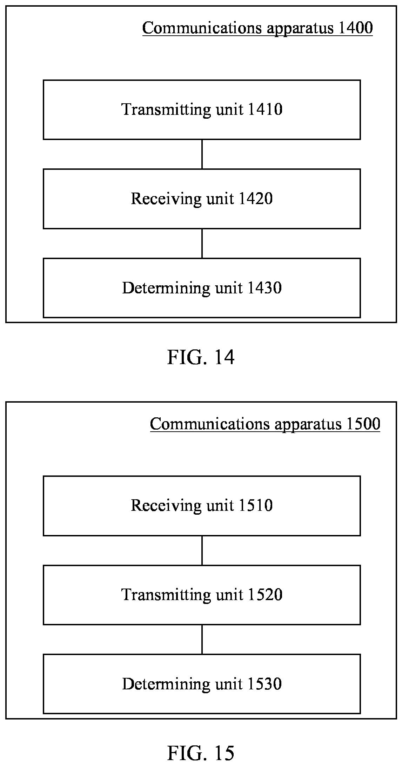

The method embodiments of this application are described in detail above with reference to FIG. 1 to FIG. 13. Apparatus embodiments of this application are described below in detail with reference to FIG. 14 to FIG. 16. It should be understood that the description of the method embodiments corresponds to the description of the apparatus embodiments, and therefore, for parts that are not described in detail, reference may be made to the foregoing method embodiments.

FIG. 14 is a schematic structural diagram of a communications apparatus according to an embodiment of this application. The communications apparatus 1400 in FIG. 14 includes a transmitting unit 1410, which is specifically as follows.

The transmitting unit 1410 is configured to transmit first information to a network device, where the first information is used to indicate energy state information of the apparatus, energy corresponding to the energy state information is capable of being used by the apparatus to receive data, and the apparatus is a zero-power terminal device.

Optionally, the energy state information includes at least one of the following information: energy supply manner, energy storage state, an allowed length of to-be-received data, a data transmission rate, recovery duration, wake-up duration, operation duration, entering energy recovery state, or exiting energy recovery state.

Optionally, the apparatus 1400 further includes a determining unit 1430, configured to determine the energy state information based on a current energy state of the apparatus.

Optionally, the apparatus 1400 further includes a determining unit 1430, configured to determine, based on a current energy state of the apparatus, whether to transmit the first information.

Optionally, the apparatus 1400 further includes a receiving unit 1420, configured to receive second information transmitted by the network device, where the second information is used to indicate whether data corresponding to the apparatus is cached in the network device.

Optionally, the second information is carried in a beacon frame, and a traffic indication map TIM in the beacon frame indicates the second information.

Optionally, the apparatus 1400 further includes a receiving unit 1420, configured to receive third information transmitted by the network device, where the third information is used to indicate whether data corresponding to the apparatus is still cached in the network device after the apparatus receives data transmitted by the network device.

Optionally, the data transmitted by the network device is carried in a second physical layer protocol data unit PPDU frame, and a more data field in frame control fields in the second PPDU frame indicates the third information.

Optionally, the first information is carried in a power saving-poll PS-Poll frame, and the apparatus operates in a power save mode.

Optionally, the first information is carried in a first physical layer protocol data unit PPDU frame, and a type of the first PPDU frame is a data frame, a control frame, or a management frame.

Optionally, the first information is carried in a medium access control MAC layer header or a frame body field of the first PPDU frame.

Optionally, the first information is carried in a frame control field in the MAC header.

Optionally, the first information is carried in a power management field of a frame control field.

Optionally, a subtype field of the frame control field indicates that the first PPDU frame carries the first information.

Optionally, the first information is carried in a null data packet NDP frame.

Optionally, the first information is carried in a signal field of the NDP frame.

Optionally, the NDP CMAC PPDU body field of the signal field indicates the first information.

Optionally, the apparatus 1400 is a zero-power station STA, and the network device is an access point AP.

FIG. 15 is a schematic structural diagram of a communications apparatus according to an embodiment of this application. A communications apparatus 1500 in FIG. 15 includes a receiving unit 1510 and a transmitting unit 1520, which are specifically as follows.

The receiving unit 1510 is configured to receive first information transmitted by a terminal device, where the first information is used to indicate energy state information of the terminal device, energy corresponding to the energy state information is capable of being used by the terminal device to receive data, and the terminal device is a zero-power terminal device.

The transmitting unit 1520 is configured to transmit data to the terminal device based on the first information.

Optionally, the energy state information includes at least one of the following information: energy supply manner, energy storage state, an allowed length of to-be-received data, a data transmission rate, recovery duration, wake-up duration, operation duration, entering energy recovery state, or exiting energy recovery state.

Optionally, the apparatus 1500 further includes a determining unit 1530, configured to determine to-be-transmitted data based on the first information; and the transmitting unit 1520 is further configured to transmit the data to the terminal device.

Optionally, the apparatus 1500 further includes a determining unit 1530, configured to determine, based on the first information, whether to transmit data.

Optionally, the transmitting unit 1520 is further configured to transmit second information to the terminal device, where the second information is used to indicate whether data corresponding to the terminal device is cached in the apparatus.

Optionally, the second information is carried in a beacon frame, and a traffic indication map TIM in the beacon frame indicates the second information.

Optionally, the transmitting unit 1520 is further configured to transmit third information to the terminal device, where the third information is used to indicate whether data corresponding to the terminal device is still cached in the apparatus after the apparatus transmits data to the terminal device.

Optionally, the data transmitted by the apparatus is carried in a second physical layer protocol data unit PPDU frame, and a more data field in frame control fields in the second PPDU frame indicates the third information.

Optionally, the first information is carried in a power saving-poll PS-Poll frame, and the terminal device operates in a power save mode.

Optionally, the first information is carried in a first physical layer protocol data unit PPDU frame, and a type of the first PPDU frame is a data frame, a control frame, or a management frame.

Optionally, the first information is carried in a medium access control MAC layer header or a frame body field of the first PPDU frame.

Optionally, the first information is carried in a frame control field in the MAC header.

Optionally, the first information is carried in a power management field of a frame control field.

Optionally, a subtype field of the frame control field indicates that the first PPDU frame carries the first information.

Optionally, the first information is carried in a null data packet NDP frame.

Optionally, the first information is carried in a signal field of the NDP frame.

Optionally, the NDP CMAC PPDU body field of the signal field indicates the first information.

Optionally, the terminal device is a zero-power station STA, and the apparatus 1500 is an access point AP.

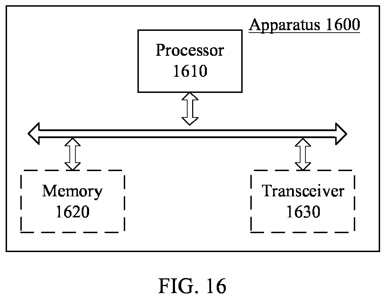

FIG. 16 is a schematic structural diagram of an apparatus according to an embodiment of this application. Dashed lines in FIG. 16 indicate that a unit or module is optional. The apparatus 1600 may be used to implement the methods described in the foregoing method embodiments. The apparatus 1600 may be a chip or a communications apparatus.

The apparatus 1600 may include one or more processors 1610. The processor 1610 may allow the apparatus 1600 to implement the methods described in the foregoing method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program that may be executed by the processor 1610 to cause the processor 1610 to perform the methods described in the foregoing method embodiments. The memory 1620 may be independent of the processor 1610 or may be integrated into the processor 1610.

The apparatus 1600 may further include a transceiver 1630. The processor 1610 may communicate with another device or chip through the transceiver 1630. For example, the processor 1610 may transmit data to and receive data from another device or chip through the transceiver 1630.

An embodiment of this application further provides a computer-readable storage medium for storing a program. The computer-readable storage medium may be applied to a communications apparatus provided in embodiments of this application, and the program causes a computer to execute the methods to be executed by the communications apparatus in various embodiments of this application.

An embodiment of this application further provides a computer program product. The computer program product includes a program. The computer program product may be applied to a communications apparatus provided in embodiments of this application, and the program causes a computer to execute the methods to be executed by the communications apparatus in various embodiments of this application.

An embodiment of this application further provides a computer program. The computer program may be applied to a communications apparatus provided in embodiments of this application, and the computer program causes a computer to execute the methods to be executed by the communications apparatus in various embodiments of this application.

It should be understood that, in embodiments of this application, "B that is corresponding to A" means that B is associated with A, and B may be determined based on A. However, it should also be understood that, determining B based on A does not mean determining B based only on A, but instead B may be determined based on A and/or other information.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and parts displayed as units may or may not be physical units, and may be located in one place, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
transmitting, by a terminal device, first information to a network device, wherein the first information is used to indicate energy state information of the terminal device, energy corresponding to the energy state information is capable of being used by the terminal device to receive data, and the terminal device is a zero-power terminal device.

2. The method according to claim 1, wherein the energy state information comprises at least one of following:
energy supply manner, energy storage state, an allowed length of to-be-received data, a data transmission rate, recovery duration, wake-up duration, operation duration, entering energy recovery state, or exiting energy recovery state.

3. The method according to claim 1 or 2, wherein before the transmitting, by a terminal device, first information to a network device, the method further comprises:
determining, by the terminal device, the energy state information based on a current energy state of the terminal device.

4. The method according to any one of claims 1 to 3, wherein before the transmitting, by a terminal device, first information to a network device, the method further comprises:
determining, by the terminal device based on a current energy state of the terminal device, whether to transmit the first information.

5. The method according to any one of claims 1 to 4, wherein before the transmitting, by a terminal device, first information to a network device, the method further comprises:
receiving, by the terminal device, second information transmitted by the network device, wherein the second information is used to indicate whether data corresponding to the terminal device is cached in the network device.

6. The method according to claim 5, wherein the second information is carried in a beacon frame, and a traffic indication map TIM in the beacon frame indicates the second information.

7. The method according to any one of claims 1 to 6, wherein the method further comprises:
receiving, by the terminal device, third information transmitted by the network device, wherein the third information is used to indicate whether data corresponding to the terminal device is still cached in the network device after the terminal device receives data transmitted by the network device.

8. The method according to claim 7, wherein the data transmitted by the network device is carried in a second physical layer protocol data unit PPDU frame, and a more data field in a frame control field in the second PPDU frame indicates the third information.

9. The method according to any one of claims 1 to 8, wherein the first information is carried in a power saving-poll PS-Poll frame, and the terminal device operates in a power save mode.

10. The method according to any one of claims 1 to 8, wherein the first information is carried in a first physical layer protocol data unit PPDU frame, and a type of the first PPDU frame is a data frame, a control frame, or a management frame.

11. The method according to claim 10, wherein the first information is carried in a medium access control MAC layer header or a frame body field of the first PPDU frame.

12. The method according to claim 11, wherein the first information is carried in a frame control field in the MAC header.

13. The method according to claim 12, wherein the first information is carried in a power management field of a frame control field.

14. The method according to claim 12 or 13, wherein a subtype field of the frame control field indicates that the first PPDU frame carries the first information.

15. The method according to any one of claims 1 to 8, wherein the first information is carried in a null data packet NDP frame.

16. The method according to claim 15, wherein the first information is carried in a signal field of the NDP frame.

17. The method according to claim 16, wherein an NDP CMAC PPDU body field of the signal field indicates the first information.

18. The method according to any one of claims 1 to 17, wherein the terminal device is a zero-power station STA, and the network device is an access point AP.

19. A communication method, comprising:
receiving, by a network device, first information transmitted by a terminal device, wherein the first information is used to indicate energy state information of the terminal device, energy corresponding to the energy state information is capable of being used by the terminal device to receive data, and the terminal device is a zero-power terminal device; and
transmitting, by the network device, data to the terminal device based on the first information.

20. The method according to claim 19, wherein the energy state information comprises at least one of following:
energy supply manner, energy storage state, an allowed length of to-be-received data, a data transmission rate, recovery duration, wake-up duration, operation duration, entering energy recovery state, or exiting energy recovery state.

21. The method according to claim 19 or 20, wherein the transmitting, by the network device, data to the terminal device based on the first information comprises:
determining, by the network device, to-be-transmitted data based on the first information; and
transmitting, by the network device, the data to the terminal device.

22. The method according to any one of claims 19 to 21, wherein before the transmitting, by the network device, data to the terminal device based on the first information, the method further comprises:
determining, by the network device based on the first information, whether to transmit the data.

23. The method according to any one of claims 19 to 22, wherein before the receiving, by a network device, first information transmitted by a terminal device, the method further comprises:
transmitting, by the network device, second information to the terminal device, wherein the second information is used to indicate whether data corresponding to the terminal device is cached in the network device.

24. The method according to claim 23, wherein the second information is carried in a beacon frame, and a traffic indication map TIM in the beacon frame indicates the second information.

25. The method according to any one of claims 19 to 24, wherein the method further comprises:
transmitting, by the network device, third information to the terminal device, wherein the third information is used to indicate whether data corresponding to the terminal device is still cached in the network device after the network device transmits data to the terminal device.

26. The method according to claim 25, wherein the data transmitted by the network device is carried in a second physical layer protocol data unit PPDU frame, and a more data field in a frame control field in the second PPDU frame indicates the third information.

27. The method according to any one of claims 19 to 26, wherein the first information is carried in a power saving-poll PS-Poll frame, and the terminal device operates in a power save mode.

28. The method according to any one of claims 19 to 26, wherein the first information is carried in a first physical layer protocol data unit PPDU frame, and a type of the first PPDU frame is a data frame, a control frame, or a management frame.

29. The method according to claim 28, wherein the first information is carried in a medium access control MAC layer header or a frame body field of the first PPDU frame.

30. The method according to claim 29, wherein the first information is carried in a frame control field in the MAC header.

31. The method according to claim 30, wherein the first information is carried in a power management field of a frame control field.

32. The method according to claim 30 or 31, wherein a subtype field of the frame control field indicates that the first PPDU frame carries the first information.

33. The method according to any one of claims 19 to 26, wherein the first information is carried in a null data packet NDP frame.

34. The method according to claim 33, wherein the first information is carried in a signal field of the NDP frame.

35. The method according to claim 34, wherein an NDP CMAC PPDU body field of the signal field indicates the first information.

36. The method according to any one of claims 19 to 35, wherein the terminal device is a zero-power station STA, and the network device is an access point AP.

37. A communications apparatus, comprising:
a transmitting unit, configured to transmit first information to a network device, wherein the first information is used to indicate energy state information of the apparatus, energy corresponding to the energy state information is capable of being used by the apparatus to receive data, and the apparatus is a zero-power terminal device.

38. The apparatus according to claim 37, wherein the energy state information comprises at least one of following:
energy supply manner, energy storage state, an allowed length of to-be-received data, a data transmission rate, recovery duration, wake-up duration, operation duration, entering energy recovery state, or exiting energy recovery state.

39. The apparatus according to claim 37 or 38, wherein the apparatus further comprises a determining unit, configured to determine the energy state information based on a current energy state of the apparatus.

40. The apparatus according to any one of claims 37 to 39, wherein the apparatus further comprises a determining unit, configured to determine, based on a current energy state of the apparatus, whether to transmit the first information.

41. The apparatus according to any one of claims 37 to 40, wherein the apparatus further comprises a receiving unit, configured to receive second information transmitted by the network device, wherein the second information is used to indicate whether data corresponding to the apparatus is cached in the network device.

42. The apparatus according to claim 41, wherein the second information is carried in a beacon frame, and a traffic indication map TIM in the beacon frame indicates the second information.

43. The apparatus according to any one of claims 37 to 42, wherein the apparatus further comprises a receiving unit, configured to receive third information transmitted by the network device, wherein the third information is used to indicate whether data corresponding to the apparatus is still cached in the network device after the apparatus receives data transmitted by the network device.

44. The apparatus according to claim 43, wherein the data transmitted by the network device is carried in a second physical layer protocol data unit PPDU frame, and a more data field in a frame control field in the second PPDU frame indicates the third information.

45. The apparatus according to any one of claims 37 to 44, wherein the first information is carried in a power saving-poll PS-Poll frame, and the apparatus operates in a power save mode.

46. The apparatus according to any one of claims 37 to 44, wherein the first information is carried in a first physical layer protocol data unit PPDU frame, and a type of the first PPDU frame is a data frame, a control frame, or a management frame.

47. The apparatus according to claim 46, wherein the first information is carried in a medium access control MAC layer header or a frame body field of the first PPDU frame.

48. The apparatus according to claim 47, wherein the first information is carried in a frame control field in the MAC header.

49. The apparatus according to claim 48, wherein the first information is carried in a power management field of a frame control field.

50. The apparatus according to claim 48 or 49, wherein a subtype field of the frame control field indicates that the first PPDU frame carries the first information.

51. The apparatus according to any one of claims 37 to 44, wherein the first information is carried in a null data packet NDP frame.

52. The apparatus according to claim 51, wherein the first information is carried in a signal field of the NDP frame.

53. The apparatus according to claim 52, wherein an NDP CMAC PPDU body field of the signal field indicates the first information.

54. The apparatus according to any one of claims 37 to 53, wherein the apparatus is a zero-power station STA, and the network device is an access point AP.

55. A communications apparatus, comprising:
a receiving unit, configured to receive first information transmitted by a terminal device, wherein the first information is used to indicate energy state information of the terminal device, energy corresponding to the energy state information is capable of being used by the terminal device to receive data, and the terminal device is a zero-power terminal device; and
a transmitting unit, configured to transmit data to the terminal device based on the first information.

56. The apparatus according to claim 55, wherein the energy state information comprises at least one of following: energy supply manner, energy storage state, an allowed length of to-be-received data, a data transmission rate, recovery duration, wake-up duration, operation duration, entering energy recovery state, or exiting energy recovery state.

57. The apparatus according to claim 55 or 56, wherein the apparatus further comprises a determining unit, configured to determine to-be-transmitted data based on the first information; and the transmitting unit is further configured to transmit the data to the terminal device.

58. The apparatus according to any one of claims 55 to 57, wherein the apparatus further comprises a determining unit, configured to determine, based on the first information, whether to transmit data.

59. The apparatus according to any one of claims 55 to 58, wherein the transmitting unit is further configured to transmit second information to the terminal device, wherein the second information is used to indicate whether data corresponding to the terminal device is cached in the apparatus.

60. The apparatus according to claim 59, wherein the second information is carried in a beacon frame, and a traffic indication map TIM in the beacon frame indicates the second information.

61. The apparatus according to any one of claims 55 to 60, wherein the transmitting unit is further configured to transmit third information to the terminal device, wherein the third information is used to indicate whether data corresponding to the terminal device is still cached in the apparatus after the apparatus transmits data to the terminal device.

62. The apparatus according to claim 61, wherein the data transmitted by the apparatus is carried in a second physical layer protocol data unit PPDU frame, and a more data field in a frame control field in the second PPDU frame indicates the third information.

63. The apparatus according to any one of claims 55 to 62, wherein the first information is carried in a power saving-poll PS-Poll frame, and the terminal device operates in a power save mode.

64. The apparatus according to any one of claims 55 to 62, wherein the first information is carried in a first physical layer protocol data unit PPDU frame, and a type of the first PPDU frame is a data frame, a control frame, or a management frame.

65. The apparatus according to claim 64, wherein the first information is carried in a medium access control MAC layer header or a frame body field of the first PPDU frame.

66. The apparatus according to claim 65, wherein the first information is carried in a frame control field in the MAC header.

67. The apparatus according to claim 66, wherein the first information is carried in a power management field of a frame control field.

68. The apparatus according to claim 66 or 67, wherein a subtype field of the frame control field indicates that the first PPDU frame carries the first information.

69. The apparatus according to any one of claims 55 to 62, wherein the first information is carried in a null data packet NDP frame.

70. The apparatus according to claim 69, wherein the first information is carried in a signal field of the NDP frame.

71. The apparatus according to claim 70, wherein an NDP CMAC PPDU body field of the signal field indicates the first information.

72. The apparatus according to any one of claims 55 to 71, wherein the terminal device is a zero-power station STA, and the apparatus is an access point AP.

73. A communications apparatus, comprising a memory, a transceiver, and a processor, wherein the memory is configured to store a program, the processor performs data transmission and receiving by using the transceiver, and the processor is configured to invoke the program in the memory to execute the method according to any one of claims 1 to 18.

74. A communications apparatus, comprising a memory, a transceiver, and a processor, wherein the memory is configured to store a program, the processor performs data transmission and receiving by using the transceiver, and the processor is configured to invoke the program in the memory to execute the method according to any one of claims 19 to 36.

75. A communications apparatus, comprising a processor, configured to invoke a program from a memory to execute the method according to any one of claims 1 to 18.

76. A communications apparatus, comprising a processor, configured to invoke a program from a memory to execute the method according to any one of claims 19 to 36.

77. A chip, comprising a processor, configured to invoke a program from a memory to cause a device with the chip installed to execute the method according to any one of claims 1 to 18.

78. A chip, comprising a processor, configured to invoke a program from a memory to cause a device with the chip installed to execute the method according to any one of claims 19 to 36.

79. A computer-readable storage medium, wherein the computer-readable storage medium stores a program, and the program causes a computer to perform the method according to any one of claims 1 to 18.

80. A computer-readable storage medium, wherein the computer-readable storage medium stores a program, and the program causes a computer to perform the method according to any one of claims 19 to 36.

81. A computer program product, comprising a program, wherein the program causes a computer to execute the method according to any one of claims 1 to 18.

82. A computer program product, comprising a program, wherein the program causes a computer to execute the method according to any one of claims 19 to 36.

83. A computer program, wherein the computer program causes a computer to execute the method according to any one of claims 1 to 18.

84. A computer program, wherein the computer program causes a computer to execute the method according to any one of claims 19 to 36.
